# EUROPÄISCHE PATENTSCHRIFT

(11) **EP 1 212 597 B1**
(45) Veröffentlichungstag und Bekanntmachung des Hinweises auf die Patenterteilung: **23.02.2005**
(21) Anmeldenummer: 00963912.1
(22) Anmeldetag: 22.08.2000
(51) Int. Cl.: G01M 11/06, G01S 7/40

(54) **EINSTELLGERÄT FÜR SCHEINWERFER ODER ABSTANDSSENSOR EINES FAHRZEUGS MIT AUSRICHTUNG ZUR ANFAHRACHSE**
SETTING UNIT FOR HEADLIGHTS OR DISTANCE SENSOR OF A VEHICLE WITH ALIGNMENT IN RELATION TO THE STARTING AXIS
APPAREIL DE REGLAGE POUR PHARE OU DETECTEUR DE DISTANCE D'UN VEHICULE AVEC ALIGNEMENT PAR RAPPORT A L'AXE DE DEMARRAGE

(30) Priorität: 28.08.1999 DE 19941034
(43) Veröffentlichungstag der Anmeldung: 12.06.2002
(73) Patentinhaber: ROBERT BOSCH GMBH, 70442 Stuttgart (DE)
(72) Erfinder: ADOLPH, Dietrich, 73095 Albershausen (DE); REMMELE, Walter, 70771 Leinfelden-Echterdingen (DE); NOBIS, Guenter, 72622 Nuertingen (DE)
(86) Internationale Anmeldenummer: PCT/DE2000/002851
(87) Internationale Veröffentlichungsnummer: WO 2001/016573

(56) Entgegenhaltungen:
- WO-A-00/55576
- DE-A- 19 757 760
- DE-A- 19 840 307
- DE-A- 19 900 018
- DE-C- 19 642 810

## Beschreibung

Die Erfindung bezieht sich auf eine Einstellvorrichtung mit einem Einstellgerät für Scheinwerfer oder für einen Abstandssensor eines Fahrzeuges und mit einer optischen Justiereinrichtung zum Ausrichten des Einstellgerätes relativ zu dem Fahrzeug.

Eine derartige Einstellvorrichtung ist in der DE 197 07 590 A1 angegeben. Bei dieser bekannten Einstellvorrichtung wird ein Einstellgerät für einen Radar-Abstandssensor mittels einer Peileinheit auf Symmetrieachsen der Fahrzeugkarosserie eingestellt. In der Regel weicht die Karosserieachse von der Fahrachse des Kraftfahrzeuges um einen gewissen Winkel ab, der meist kleiner als 0,5° ist, in Einzelfällen aber auch bis zu einigen Grad betragen kann. Da die Messung mit dem Abstandssensor empfindlich von seiner richtigen Justierung abhängt, können sich durch die Einstellung auf die Karosserieachse wesentliche Fehlmessungen ergeben. Zum Justieren des Einstellgerätes wird das Sensorsignal in Form eines Radarsignals auf einen in einem gewissen Abstand vor dem Abstandssensor angeordneten, in der Regel planen Reflektor gerichtet und das von dem Reflektor zurück geworfene Signal mit dem Empfänger des Sensors und einer Auswerteeinrichtung erfasst, um die richtige Ausrichtung des Abstandssensors aufgrund der erfassten Signale des Richtdiagrammes in Form der Radarkeule zu bestimmen und erforderlichenfalls zu justieren. Hierzu kann beispielsweise auf das Maximum der Radarkeule justiert werden oder aber auf außerhalb des Maximums liegende ausgeprägte Symmetriepunkte.

Entsprechende Fehleinstellungen bezüglich der Fahrachse ergeben sich auch, wenn die Scheinwerfer auf die Karosserieachse justiert werden, wie bei bisherigen Einstellgeräten üblich.

Wie in der nicht vorveröffentlichten deutschen Patentanmeldung Nr. 199 00 018.2-31 ausgeführt, kann die Fahrachse aus den Einzelspuren der Räder der ungelenkten Fahrachse, in der Regel der Hinterachse, durch Mittelung bestimmt werden, d.h. als Winkelhalbierende der beiden Einzelspuren. In dieser Druckschrift ist vorgeschlagen, die Einzelspuren mittels an den beiden ungelenkten Rädern angebrachter Lichtprojektoren zu bestimmen, wobei zwei quer zur Fahrtrichtung des Fahrzeuges angeordnete Markierungsskalen vorgesehen sind und die Schnittpunkte der Einzelspuren mit den Markierungsskalen abgelesen werden, um daraus die Fahrachse zu bestimmen.

In der weiteren nicht vorveröffentlichten deutschen Patentanmeldung Nr. 198 40 307 ist eine weitere Einstellvorrichtung dieser Art angegeben, wobei noch weitere Erläuterungen zur Justierung des Abstandssensors und zu einem Einstellgerät gemacht sind.

Der Erfindung liegt die Aufgabe zugrunde, eine Einstellvorrichtung der eingangs angegebenen Art bereit zu stellen, mit der bei möglichst wenig Aufwand eine Ausrichtung des Einstellgeräts auf die Fahrachse des Fahrzeuges vorgenommen werden kann.

Diese Aufgabe wird mit den Merkmalen des Anspruches 1 gelöst. Hiernach ist vorgesehen, dass die Justiereinrichtung eine Auswerteeinrichtung aufweist und zum Ermitteln der Fahrachsrichtung während der Anfahrt des Fahrzeuges ausgebildet ist und Mittel zum Ausrichten des Einstellgerätes relativ zur Fahrachsrichtung aufweist.

Bereits während der Anfahrt auf dem Prüfplatz kann z.B. während einer Radumdrehung mittels der Justiereinrichtung und der darin vorgesehenen Auswerteeinrichtung die Fahrachsrichtung des Fahrzeugs errechnet und das Einstellgerät auf die Fahrachsrichtung ausgerichtet werden. Eine Möglichkeit, die Fahrachsrichtung während der Fahrt zu ermitteln, ist bei einer Vorrichtung zur Bestimmung von Achsgeometriedaten in der DE 197 57 760 A1 an sich gezeigt. Hierbei werden mittels Bildaufnahmeeinrichtungen, insbesondere Kameras, aus zwei verschiedenen Perspektiven u.a. Bezugsmerkmale des Prüfplatzes und fahrzeugfeste Karosseriemerkmale erfasst und die Fahrachse als Winkelhalbierende der beiden ungelenkten Räder bestimmt, wobei die Berechnung nach bekannten trigonometrischen Beziehungen aus der örtlichen Lage der Merkmale während der Vorbeifahrt erfolgt. Nachdem vorliegend bereits bei der Anfahrt die Fahrachsrichtung ermittelt und das Einstellgerät auf diese ausgerichtet worden ist, kann dann ohne weiteres die Einstellung der Scheinwerfer bzw. des Abstandssensors auf die Fahrachsrichtung erfolgen.

Eine besonders einfache Ausbildung der Einstellvorrichtung besteht darin, dass die Fahrachsrichtung auf der Grundlage der Erfassung einer Markierungseinrichtung mit mindestens einer prüfplatzfesten Bezugsmerkmalsanordnung, die mindestens drei Bezugsmerkmale aufweist, und der Bewegungsbahn mindestens eines fahrzeugfesten Karosseriemerkmals ermittelt wird. Mit diesen Maßnahmen kann die Fahrachsrichtung allein durch die Bewegungsbahn der Karosseriemerkmale bestimmt werden, ohne dass die Winkelhalbierende zwischen den ungelenkten Rädern bestimmt werden muss.

Für eine einfache Ausbildung der Einstellvorrichtung sind weiterhin die Maßnahmen günstig, dass die Justiereinrichtung mindestens zwei Kameras zum gleichzeitigen Erfassen der Bezugsmerkmale, des mindestens einen Karosseriemerkmals und von Gerätemerkmalen des Einstellgerätes aus zwei verschiedenen Perspektiven aufweist. Mittels der Gerätemerkmale des Einstellgerätes kann hierbei das Einstellgerät leicht auf die Fahrachsrichtung ausgerichtet werden.

Die Ausrichtung des Einstellgerätes auf die Fahrachsrichtung läßt sich dadurch leicht vornehmen, dass die Justiereinrichtung eine Anzeigeeinrichtung zum Anzeigen der Ausrichtung des Einstellgerätes auf die Fahrachsrichtung aufweist. Eine Unebenheit des Prüfplatzes kann dadurch erkannt und bei der Einstellung kompensiert werden, dass aufgrund der Bewegungsbahn der Karosseriemerkmale eine Neigung des Fahrzeuges in Längsrichtung feststellbar ist und dass das Einstellgerät in Abhängigkeit von dieser Neigung ausrichtbar ist.

Die Einstellvorrichtung bietet auch die Möglichkeit, dass eine Neigung des Fahrzeuges quer zur Längsrichtung durch Auswertung der Bezugsmerkmale ermittelt wird. Hierdurch können auch Unebenheiten des Prüfplatzes quer zur Fahrzeugachse kompensiert werden.

Eine weitere Vereinfachung für die Einstellung wird dadurch erzielt, dass die Auswertung der auf eine Mattscheibe des Einstellgerätes projizierten Lichtverteilung eines Scheinwerfers automatisch erfolgt.

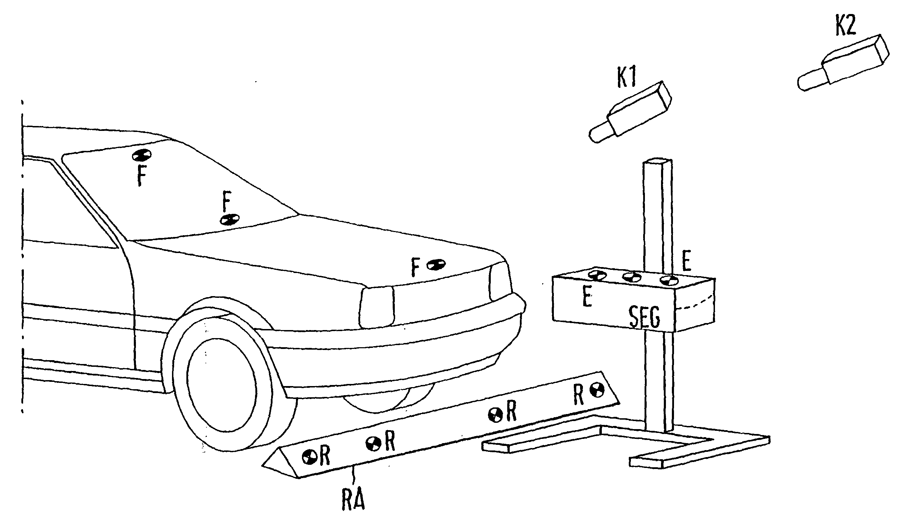

Die Erfindung wird nachfolgend anhand eines Ausführungsbeispiels unter Bezugnahme auf die Zeichnung näher erläutert.

Die Fig. zeigt eine im Frontbereich eines Kraftfahrzeuges angeordnete Einstellvorrichtung mit einem Einstellgerät SEG für die Fahrzeugscheinwerfer. Das Einstellgerät SEG, das an sich in herkömmlicher Weise ausgebildet sein kann und mit seiner Optik das Scheinwerferlicht im Wesentlichen vollständig erfasst, wird vorliegend mittels einer Justiereinrichtung auf die Fahrachsrichtung ausgerichtet, wozu mittels der Justiereinrichtung und einer in dieser vorgesehenen Auswerteeinrichtung zunächst die Fahrachsrichtung bei der Anfahrt des Fahrzeuges auf den Prüfplatz z.B. während nur einer Radumdrehung bestimmt wird.

Die Justiereinrichtung weist eine Merkmalsanordnung mit mehreren Bezugsmerkmalen R einer Bezugsmerkmalsanordnung RA, die zumindest während der Messung fest bezüglich des Prüfplatzes angeordnet ist, mehrere fahrzeugfeste Karosseriemerkmale F und mehrere an dem Einstellgerät SEG angebrachte Gerätemerkmale G sowie als Bildaufnahmeeinrichtung zwei Kameras K1, K2 auf, mit denen die Bezugsmerkmale R, Karosseriemerkmale F und Gerätemerkmale E aus zwei verschiedenen Perspektiven gleichzeitig erfasst werden. Die Bezugsmerkmale R, die Karosseriemerkmale F und die Gerätemerkmale E sind untereinander jeweils räumlich versetzt, so dass durch Aufnahme der Merkmalsanordnungen während der Fahr zu unterschiedlichen Zeitpunkten nach an sich bekannten trigonometrischen Beziehungen die Fahrachsrichtung des Fahrzeugs in der Auswerteeinrichtung berechnet werden kann. Hierbei können auch Lenkeinschläge des Fahrzeugs erkannt und derartige Anfahrbewegungen des Fahrzeugs außer Acht gelassen werden. Das Einstellgerät SEG kann dann auf die ermittelte Fahrachsrichtung ausgerichtet werden, wozu z.B. eine Peileinrichtung oder Anzeigeeinrichtung, wie z.B. ein Bildschirm, vorgesehen sein kann. Auf dem Bildschirm können die Fahrachsrichtung und die optische Achse des Einstellgerätes SEG angezeigt und parallel ausgerichtet bzw. zur Deckung gebracht werden.

Beispielsweise kann zur Ausrichtung des Einstellgerätes SEG auf die Fahrachsrichtung auch vorgesehen sein, dass zunächst der Winkel zwischen der Karosserieachse und der Fahrachse festgestellt wird, das Einstellgerät SEG mit einer Peileinrichtung auf markante Karosseriedetails, wie z.B. die äußere Kontur der Scheinwerfer, ausgerichtet wird und der optische Teil des Einstellgerätes SEG mit seiner optischen Achse gegenüber dem Trageteil des Einstellgerätes SEG mittels einer Winkelskala entsprechend dem Winkel zwischen Karosserieachse und Fahrachsrichtung geschwenkt wird. Auch andere Ausrichthilfen sind denkbar.

Die Einstellvorrichtung bietet den zusätzlichen Vorteil gegenüber bisherigen Einstellvorrichtungen, dass der Prüfplatz in Fahrtrichtung nicht notwendigerweise horizontal sein muss. Die Neigung des Fahrzeuges in Längsrichtung läßt sich durch die Justiereinrichtung und die Auswerteeinrichtung feststellen, so dass auch eine Einstellung des Einstellgerätes SEG in vertikaler Richtung bezüglich der Scheinwerfer ermöglicht wird. Wenn der Prüfplatz quer zur Fahrtrichtung nicht waagrecht ist, kann die aktuelle Lage des Fahrzeuges in Querrichtung bzw. Neigung des Prüfplatzes in Querrichtung dadurch festgestellt werden, dass die Bezugsmerkmalsanordnung RA, die quer zur Fahrzeuglängsrichtung liegt, einen der Justiereinrichtung bekannten Abstand zum Boden aufweist. Beispielsweise ist eine pendelartige Aufhängung geeignet. Das Einstellgerät SEG kann dann entsprechend auch aufgrund der aktuellen Lage der Bezugsmerkmalsanordnung RA bezüglich der Neigung in Querrichtung korrigiert werden. Hierzu sind mindestens zwei der z.B. drei oder mehr Gerätemerkmale des Einstellgerätes SEG in Querrichtung versetzt.

Zur weiteren Vereinfachung der Scheinwerfereinstellung kann vorgesehen sein, dass die auf eine Mattscheibe oder eine Projektionswand des Einstellgerätes SEG projizierte Lichtverteilung mit entsprechenden Kameras ausgewertet wird.

In ähnlicher Weise wie vorstehend beschrieben, läßt sich auch ein Einstellgerät für einen Abstandssensor eines Fahrzeuges auf die Fahrachsrichtung ausrichten.

## Patentansprüche

1. Einstellvorrichtung mit einem Einstellgerät (SEG) für Scheinwerfer oder für einen Abstandssensor eines Fahrzeuges und mit einer optischen Justiereinrichtung (K1, K2, F,R,E) zum Ausrichten des Einstellgerätes (SEG) relativ zu dem Fahrzeug,
**dadurch gekennzeichnet,**
**dass** die Justiereinrichtung (K1, K2, F,R,E) eine Auswerteeinrichtung aufweist und zum Ermitteln der Fahrachsrichtung während der Anfahrt des Fahrzeuges ausgebildet ist und Mittel (E) zum Ausrichten des Einstellgerätes (SEG) relativ zur Fahrachsrichtung aufweist.

2. Einstellvorrichtung nach Anspruch 1,
**dadurch gekennzeichnet,**
**dass** die Fahrachsrichtung auf der Grundlage der Erfassung einer Markierungseinrichtung mit mindestens einer prüfplatzfesten Bezugsmerkmalsanordnung (RA), die mindestens drei Bezugsmerkmale (R) aufweist, und der Bewegungsbahn mindestens eines fahrzeugfesten Karosseriemerkmals (F) ermittelt wird.

3. Einstellvorrichtung nach Anspruch 2,
**dadurch gekennzeichnet,**
**dass** die Justiereinrichtung mindestens zwei Kameras (K1, K2) zum gleichzeitigen Erfassen der Bezugsmerkmale (R), des mindestens einen Karosseriemerkmals (F) und von Gerätemerkmalen (E) des Einstellgerätes (SEG) aus zwei verschiedenen Perspektiven aufweist.

4. Einstellvorrichtung nach einem der vorhergehenden Ansprüche,
**dadurch gekennzeichnet,**
**dass** die Justiereinrichtung eine Anzeigeeinrichtung zum Anzeigen der Ausrichtung des Einstellgerätes (SEG) auf die Fahrachsrichtung aufweist.

5. Einstellvorrichtung nach einem der vorhergehenden Ansprüche,
**dadurch gekennzeichnet,**
**dass** aufgrund der Bewegungsbahn der Karosseriemerkmale (F) eine Neigung des Fahrzeuges in Längsrichtung feststellbar ist und
**dass** das Einstellgerät (SEG) auch in Abhängigkeit von dieser Neigung ausrichtbar ist.

6. Einstellvorrichtung nach einem der vorhergehenden Ansprüche,
**dadurch gekennzeichnet,**
**dass** eine Neigung des Fahrzeuges quer zur Längsrichtung durch Auswertung der Bezugsmerkmale (R) ermittelt wird.

7. Einstellvorrichtung nach einem der vorhergehenden Ansprüche,
**dadurch gekennzeichnet,**
**dass** die Auswertung der auf eine Mattscheibe des Einstellgerätes (SEG) projizierten Lichtverteilung eines Scheinwerfers automatisch erfolgt.

## Claims

1. Adjustment apparatus having an adjustment device (SEG) for a headlight or for a proximity sensor of a vehicle, and having an optical adjusting device (K1, K2, F,R,E) for alignment of the adjustment device (SEG) relative to the vehicle,
**characterized**
**in that** the adjusting device (K1, K2, F,R,E) has an evaluation device and is designed to determine the travel axis direction during the starting of the vehicle, and has means (E) for alignment of the adjustment device (SEG) relative to the travel axis direction.

2. Adjustment apparatus according to Claim 1,
**characterized**
**in that** the travel axis direction is determined on the basis of the detection of a marking device having at least one reference feature arrangement (RA) which is fixed to a test position and has at least three reference features (R), and of the movement path of at least one bodywork feature (F) which is fixed to the vehicle.

3. Adjustment apparatus according to Claim 2,
**characterized**
**in that** the adjusting device has at least two cameras (K1, K2) for simultaneous detection of the reference features (R), of the at least one bodywork feature (F) and of device features (E) of the adjustment device (SEG) from two different perspectives.

4. Adjustment apparatus according to one of the preceding claims,
**characterized**
**in that** the adjusting device has an indicating device for indication of the alignment of the adjustment device (SEG) with respect to the travel axis direction.

5. Adjustment apparatus according to one of the preceding claims,
**characterized**
**in that** any inclination of the vehicle in the longitudinal direction can be determined on the basis of the movement path of the bodywork features (F), and
**in that** the adjustment device (SEG) can also be aligned as a function of this inclination.

6. Adjustment apparatus according to one of the preceding claims,
**characterized**
**in that** any inclination of the vehicle transversely with respect to the longitudinal direction is determined by evaluation of the reference features (R).

7. Adjustment apparatus according to one of the preceding claims,
**characterized**
**in that** the light distribution of a headlight, which is projected onto a matt disc of the adjustment device (SEG), is evaluated automatically.

## Revendications

1. Dispositif de réglage comportant un appareil de réglage (SEG) pour des phares ou pour un détecteur de distance d'un véhicule et une installation d'ajustage (K1, K2, F, R, E) optique destinée à orienter l'appareil de réglage (SEG) par rapport au véhicule,
**caractérisé en ce que**
l'installation d'ajustage (K1, K2, F, R, E) présente une installation d'exploitation et est conçue pour déterminer la direction de l'axe de déplacement pendant que le véhicule démarre et présente des moyens (E) destinés à orienter l'appareil de réglage (SEG) par rapport à la direction de l'axe de déplacement.

2. Dispositif de réglage selon la revendication 1,
**caractérisé en ce que**
la direction de l'axe de déplacement est déterminée en se basant sur la détection d'une installation de marquage comportant au moins un arrangement d'attributs de référence (RA), fixé à demeure sur les lieux d'essai et qui présentant au moins trois attributs de référence (R), et en se basant sur la trajectoire d'au moins un attribut de carrosserie (F) placé à demeure sur le véhicule.

3. Dispositif de réglage selon la revendication 2,
**caractérisé en ce que**
l'installation d'ajustage présente au moins deux caméras (K1, K2) destinées à détecter en même temps, selon deux perspectives différentes, les attributs de référence (R) d'au moins un attribut de carrosserie (F) et les attributs d'appareil (E) de l'appareil de réglage (SEG).

4. Dispositif de réglage selon l'une des revendications précédentes,
**caractérisé en ce que**
l'installation d'ajustage présente une installation d'affichage destinée à afficher l'orientation de l'appareil de réglage (SEG) par rapport à la direction de l'axe de déplacement.

5. Dispositif de réglage selon l'une des revendications précédentes,
**caractérisé en ce qu'**
on peut établir une inclinaison du véhicule en direction longitudinale en se basant sur la trajectoire des attributs de carrosserie (F), et
l'appareil de réglage (SEG) peut être aussi orienté en fonction de cette inclinaison.

6. Dispositif de réglage selon l'une des revendications précédentes,
**caractérisé en ce qu'**
on peut déterminer une inclinaison du véhicule transversalement à la direction longitudinale en exploitant les attributs de référence (R).

7. Dispositif de réglage selon l'une des revendications précédentes,
**caractérisé en ce qu'**
on exploite automatiquement la répartition de la lumière projetée par un phare sur un verre dépoli de l'appareil de réglage (SEG).
